# EUROPÄISCHE PATENTANMELDUNG

(11) **EP 2 528 012 A1**
(43) Veröffentlichungstag der Anmeldung: **28.11.2012**
(21) Anmeldenummer: 11004381.7
(22) Anmeldetag: 27.05.2011
(51) Int. Cl.: G06K 7/00, H01Q 1/22

(54) **Vorrichtung, System und Verfahren zum Überwachen einer Vielzahl von Aufnahmevorrichtungen**

(71) Anmelder: Data-Complex GmbH, 38820 Halberstadt (DE)
(72) Erfinder: Horn, Thomas, 38895 Langenstein (DE)
(74) Vertreter: Jehle, Volker Armin

(57) **Zusammenfassung**

Die Erfindung betrifft eine Vorrichtung, ein System und ein Verfahren zum Überwachen einer Vielzahl von Aufnahmevorrichtungen, welche dafür geeignet sind, eine Vielzahl gleichartiger Elemente aufzunehmen, insbesondere zum Überwachen von Vorgängen, welche eine Änderung der Anordnung der Vielzahl von gleichartigen Elementen in der Vielzahl von Aufnahmevorrichtungen herbeiführen.
Gemäß einem Aspekt der vorliegenden Erfindung weist eine Vorrichtung zum Überwachen einer Vielzahl von Aufnahmevorrichtungen, welche dafür geeignet sind, eine Vielzahl gleichartiger Elemente aufzunehmen, auf:

Mittel zum Empfangen eines Signals, welches Informationen über einen auszuführenden Vorgang aufweist, wobei die Informationen ein Element aus der Vielzahl gleichartiger Elemente, eine Aufnahmevorrichtung aus der Vielzahl von Aufnahmevorrichtungen und eine Zustandsmodifikation spezifizieren;
Mittel zum Auslesen von Radio Frequency Identification, RFID, Transpondern, welche ldentifikationsdaten aufweisen, wobei die Mittel zum Auslesen dafür eingerichtet sind, erste ldentifikationsdaten aus einem ersten RFID Transponder an einer ausgewählten Aufnahmevorrichtung auszulesen und zweite ldentifikationsdaten aus einem zweiten RFID Transponder an einem Element auszulesen, welches in der ausgewählten Aufnahmevorrichtung angeordnet ist;
Mittel zum Verarbeiten der aus dem ersten und zweiten RFID Transponder ausgelesenen ldentifikationsdaten, wobei die Mittel zum Verarbeiten dafür eingerichtet sind, anhand der ersten und zweiten ldentifikationsdaten zu ermitteln, ob die ausgewählte Aufnahmevorrichtung und das darin angeordnete Element in dem Signal spezifiziert sind; und
Mittel zum Freigeben oder Sperren, wobei die Mittel zum Freigeben oder Sperren dafür eingerichtet sind, basierend auf der in dem Signal spezifizierten Zustandsmodifikation, eine Entnahme des in der ausgewählten Aufnahmevorrichtung angeordneten Elements freizugeben bzw. zu erlauben oder zu sperren bzw. zu unterbinden, wenn die Mittel zum Verarbeiten ermitteln, dass die ausgewählte Aufnahmevorrichtung und das darin angeordnete Element in dem Signal spezifiziert sind.

## Beschreibung

Die Erfindung betrifft eine Vorrichtung, ein System und ein Verfahren zum Überwachen einer Vielzahl von Aufnahmevorrichtungen, welche dafür geeignet sind, eine Vielzahl gleichartiger Elemente aufzunehmen, insbesondere zum Überwachen von Vorgängen, welche eine Änderung der Anordnung der Vielzahl von gleichartigen Elementen in der Vielzahl von Aufnahmevorrichtungen herbeiführen.

Datennetzwerke dienen unter anderem dazu, eine größere Zahl an Arbeitsplätzen beziehungsweise die dort arbeitenden Mitarbeiter, also die Nutzer des Datennetzwerkes mit Datenanschlüssen zu versehen. Die Nutzer an den Arbeitsplätzen werden so mit einzelnen Diensten versorgt, beispielsweise mit Datendiensten oder auch Telekommunikationsdiensten. Um dies vorzunehmen, weisen die Datennetzwerke zentrale Verteilerpunkte, meistens Verteilerschränke auf. In den Verteilerschränken sind Patchfelder vorgesehen. Diese Patchfelder besitzen Ports, also Anschlüsse. Von den Ports dieser Patchfelder führen Datenkabel sternförmig zu den Datenanschlüssen an den Arbeitsplätzen.

In den Verteilerschränken oder Verteilerpunkten befinden sich neben den Patchfeldern auch die aktiven Geräte. Diese aktiven Geräte dienen der Verteilung der Daten, der Telefonsignale oder auch sonstiger Anwendungen.

Die Verbindung von den aktiven Geräten zu den Patchfeldern (häufig auch Patchpanels genannt) wird mit Patchkabeln realisiert. Diese Patchkabel besitzen an jedem Ende einen Stecker. Dieser Stecker ist in einen Port oder Anschluss an einem Patchfeld einsteckbar. Die Patchkabel sind flexibel und etwa 0,5 m bis 5 m lang. Bei Kupferkabeln sind die Stecker im Allgemeinen sogenannte RJ45-Stecker, Glasfasern werden mit verschiedenen Steckern konfektioniert.

Um nun einen Arbeitsplatz mit den gewünschten Diensten zu versorgen, beziehungsweise ihm diese Dienste zur Verfügung zu stellen, muss nun entsprechend das aktive Gerät mit dem entsprechenden Port am Patchfeld oder Patchpanel verbunden werden. Benötigt zum Beispiel ein Nutzer einen Telefonanschluss sowie einen Datenanschluss, so werden ihm durch das Verbinden der entsprechenden Ports mit dem aktiven Gerät die Telefonanlage und ein Datenswitch zur Benutzung zur Verfügung gestellt.

Bei Veränderungen der Dienste, bei Umzügen, Versetzungen oder auch sonstigen Reorganisationsmaßnahmen kann es erforderlich werden, Veränderungen dieser Verbindungen an den Verteilern vorzunehmen. In diesem Fall muss "umgepatcht" werden. Es müssen also Patchkabel den nunmehr benötigten Diensten entsprechend umgesteckt werden und ggf. auch komplette Geräte aus einem Rack entfernt und/oder in ein Rack eingefügt werden.

Treten bei solchen Maßnahmen Fehler auf, so sind diese einerseits schwer zu lokalisieren und zu beheben, anderseits kann durch auftretende Fehler hoher finanzieller Schaden entstehen, da zumindest Teile des fehlerhaft geänderten Systems ausfallen können und so Mitarbeiter darin gehindert sind, ihre Aufgaben zu verrichten und auch eine Beschädigung der entsprechenden Komponenten nicht auszuschließen ist. Ferner ist es insbesondere bei militärischen Anwendungen äußerst wichtig, das Datennetzwerk vor unbefugtem Zugriff, sei es zu Zwecken der Sabotage oder Spionage, zu schützen.

Der Erfindung liegt daher die Aufgabe zu Grunde, eine Vorrichtung, ein System und ein Verfahren zum Überwachen einer Vielzahl von Aufnahmevorrichtungen, welche dafür geeignet sind, eine Vielzahl gleichartiger Elemente aufzunehmen, insbesondere zum Überwachen von Vorgängen, welche eine Änderung der Anordnung der Vielzahl von gleichartigen Elementen in der Vielzahl von Aufnahmevorrichtungen herbeiführen, bereitzustellen, wobei die Vorrichtung bzw. das System einfach zu handhaben ist und die Vielzahl von Aufnahmevorrichtungen vor unbefugtem Zugriff bzw. mutwilliger Manipulation schützt.

Diese und andere Aufgaben werden erfindungsgemäß durch die Vorrichtung gemäß Anspruch 1, das Verfahren gemäß Anspruch 15 und das System gemäß Anspruch 11 gelöst.

Vorteilhafte Ausführungsformen der Erfindung sind in den abhängigen Unteransprüchen wiedergegeben.

Gemäß einem Aspekt der vorliegenden Erfindung weist eine Vorrichtung zum Überwachen einer Vielzahl von Aufnahmevorrichtungen, welche dafür geeignet sind, eine Vielzahl gleichartiger Elemente aufzunehmen, insbesondere zum Überwachen von Vorgängen, welche eine Änderung der Anordnung der Vielzahl von gleichartigen Elementen in der Vielzahl von Aufnahmevorrichtungen herbeiführen, auf:
Mittel zum Empfangen eines Signals, welches Informationen über einen auszuführenden Vorgang aufweist, wobei die Informationen ein Element aus der Vielzahl gleichartiger Elemente, eine Aufnahmevorrichtung aus der Vielzahl von Aufnahmevorrichtungen und eine Zustandsmodifikation spezifizieren;
Mittel zum Auslesen von Radio Frequency Identification, RFID, Transpondern, welche Identifikationsdaten aufweisen, wobei die Mittel zum Auslesen dafür eingerichtet sind, erste Identifikationsdaten aus einem ersten Transponder an einer ausgewählten Aufnahmevorrichtung auszulesen und zweite Identifikationsdaten aus einem zweiten Transponder an einem Element auszulesen, welches in der ausgewählten Aufnahmevorrichtung angeordnet ist;
Mittel zum Verarbeiten der aus dem ersten und zweiten Transponder ausgelesenen Identifikationsdaten, wobei die Mittel zum Verarbeiten dafür eingerichtet sind, anhand der ersten und zweiten Identifikationsdaten zu ermitteln, ob die ausgewählte Aufnahmevorrichtung und das darin angeordnete Element in dem Signal spezifiziert sind; und
Mittel zum Freigeben oder Sperren, wobei die Mittel zum Freigeben oder Sperren dafür eingerichtet sind, basierend auf der in dem Signal spezifizierten Zustandsmodifikation, eine Entnahme des in der ausgewählten Aufnahmevorrichtung angeordneten Elements freizugeben bzw. zu erlauben oder zu sperren bzw. zu unterbinden, wenn die Mittel zum Verarbeiten ermitteln, dass die ausgewählte Aufnahmevorrichtung und das darin angeordnete Element in dem Signal spezifiziert sind.

Die Vielzahl von Aufnahmevorrichtungen für eine Vielzahl gleichartiger Elemente kann hierbei beispielsweise sein: ein Patchfeld mit Anschlüssen für eine Vielzahl gleichartiger Patchkabel bzw. Stecker, ein Rack für eine Vielzahl gleichartiger Geräte, eine Steckleiste für eine Vielzahl gleichartiger Steckkarten, oder auch eine Vielzahl von Klemmbuchsen, Schützen oder Relais, in welche eine Vielzahl von Kabeln angeordnet werden kann, etc.

Gleichartige Elemente sind hierbei Elemente (z.B. Patchkabel bzw. Stecker), welche in den jeweiligen Aufnahmevorrichtungen (z.B. Patchfeld bzw. Anschlüsse) beliebig angeordnet werden können, d.h. jedes Element "passt" in jede Aufnahmevorrichtung.

Eine Änderung oder Modifikation der Anordnung der gleichartigen Elemente führen insbesondere folgende Vorgänge herbei: Entnehmen eines Elements aus einer Aufnahmevorrichtung und Einbringen eines Elements in eine Aufnahmevorrichtung.

Um das Entnehmen und Einbringen von Elementen aus bzw. in die Aufnahmevorrichtungen zu überwachen, ist die erfindungsgemäße Vorrichtung dafür eingerichtet, ein in einer Aufnahmevorrichtung angeordnetes Element freizugeben oder zu sperren.

Für ein in einer Aufnahmevorrichtung angeordnetes Element werden zwei Zustände unterschieden: Der "gesperrte" Zustand, in welchem das Element nicht aus der Aufnahmevorrichtung entnommen werden kann und der "freigegebene" Zustand, in welchem das Element aus der Aufnahmevorrichtung entnommen werden kann.

Die erfindungsgemäße Vorrichtung ist demnach dafür eingerichtet, eine Zustandsmodifikation, d.h. eine Änderung diese Zustands, zu bewirken. Beispielsweise bewirkt das "Freigeben" eines Elements somit eine Änderung des Zustands des Elements von "gesperrt" zu "freigegeben" und das "Sperren" eines Elements bewirkt eine Änderung des Zustands des Elements von "freigegeben" zu "gesperrt".

Vorteilhaft weisen die Mittel zum Auslesen eine RFID Leseeinheit auf, welche dafür eingerichtet ist, den ersten und den zweiten Transponder in serieller Abfolge auszulesen.

Eine Vorrichtung mit einer Leseeinheit ermöglicht eine besonders einfache Handhabung für den Benutzer, da für das Freigeben oder Sperren eines Elements in einer Aufnahmevorrichtung lediglich der erste Transponder der Aufnahmevorrichtung und der zweite Transponder des Elements hintereinander auszulesen sind. Fehler beim Modifizieren der Anordnung der gleichartigen Elemente in den Aufnahmevorrichtungen können hierbei jedoch nicht in jedem Fall erkannt und verhindert werden, da die erfindungsgemäße Vorrichtung nicht "erkennt" ob die Transponderdaten tatsächlich von dem Transponder einer Aufnahmevorrichtung und dem Transponder eines darin angeordneten Elements ausgelesen wurden, da das serielle Auslesen der Transponder nicht ausschließt, dass nicht zusammengehörige Transponder ausgelesen werden. Mit anderen Worten: Es kann bei einer Fehlbenutzung der erfindungsgemäßen Vorrichtung zuerst eine beliebige Aufnahmevorrichtung und dann eine beliebiges Element, welches nicht zwingend in der Aufnahmevorrichtung angeordnet sein muss, ausgelesen werden, wodurch die Mittel zum Verarbeiten der Identifikationsdaten keinen gültigen Datensatz erhalten und ein mitunter falsches Ergebnis ermitteln.

Daher weisen die Mittel zum Auslesen in einer besonders bevorzugten Ausführungsform der Erfindung eine erste und eine zweite RFID Leseeinheit auf, wobei die erste RFID Leseeinheit dafür eingerichtet ist, den ersten Transponder auszulesen und die zweite RFID Leseeinheit dafür eingerichtet ist, den zweiten Transponder auszulesen.

Vorteilhafterweise sind die erste und zweite RFID Leseeinheit dafür eingerichtet, den ersten Transponder und den zweiten Transponder parallel, also im Wesentlichen gleichzeitig, auszulesen.

Durch das parallele Auslesen des ersten Transponders (der Aufnahmevorrichtung) und des zweiten Transponders (des Elements in der Aufnahmevorrichtung) ist gewährleistet, dass nur zusammengehörige Transponder ausgelesen werden, da aufgrund der begrenzten Reichweite der RFID Leseeinheiten nur die Transponderdaten von dem Transponder einer Aufnahmevorrichtung und dem Transponder eines darin angeordneten Elements parallel ausgelesen werden können. Der Benutzer der Vorrichtung gemäß dieser bevorzugten Ausführungsform sollte auf eine korrektes "Anlegen" der Vorrichtung an die Aufnahmevorrichtung und des darin angeordneten Elements, insbesondere, der RFID Leseeinheiten an die jeweiligen Transponder, achten.

Fehler beim Modifizieren der Anordnung der gleichartigen Elemente in den Aufnahmevorrichtungen werden hierbei jedoch zuverlässig erkannt und können somit verhindert werden, da die erfindungsgemäße Vorrichtung nur Transponderdaten von Transpondern von zusammengehörige Paaren (Aufnahmevorrichtung und darin angeordnetes Element) ausliest. Fehlbenutzungen dieser Vorrichtung können somit weitgehend ausgeschlossen werden. Ein nicht korrektes "Anlegen" dieser Vorrichtung hat beispielsweise zur Folge, dass nur ein Transponder ausgelesen wird. In diesem Fall kann keine Auswertung von Transponderdaten vorgenommen werden und der Auslesevorgang kann mittels erneutem Anlegen der Vorrichtung wiederholt werden.

Um die Gefahr von Fehlbenutzungen noch weiter zu reduzieren, kann die Vorrichtung vorteilhaft mit einer Sensorik ausgestattet sein, welche dafür eingerichtet ist, zu überprüfen, ob die Vorrichtung beim Auslesen der Transponder vom Benutzer im Wesentlichen senkrecht zu einer Fläche gehalten wird, auf welcher die Vielzahl von Aufnahmevorrichtungen angeordnet sind. Somit kann vermieden werden, dass parallel der Transponder einer Aufnahmevorrichtung und der Transponder eines Elements ausgelesen wird, welches in einer benachbarten Aufnahmevorrichtung (d.h. nicht in der "ausgelesenen" Aufnahmevorrichtung) angeordnet ist.

Vorteilhafterweise ist die Vorrichtung dafür eingerichtet, dem Benutzer optisch anzuzeigen (z.B. mittels farbiger LEDs oder eines Displays), ob die Vorrichtung vom Benutzer beim Auslesen der Transponder im Wesentlichen senkrecht zu der Fläche, auf welcher die Vielzahl von Aufnahmevorrichtungen angeordnet sind, gehalten wird. Alternativ kann der Auslesevorgang abgebrochen werden, wenn die Vorrichtung vom Benutzer beim Auslesen der Transponder nicht im Wesentlichen senkrecht (z.B. innerhalb eines bestimmten Toleranzbereichs) zu der Fläche gehalten wird, auf welcher die Vielzahl von Aufnahmevorrichtungen angeordnet sind.

Vorteilhaft weist die Vorrichtung einen Lagesensor auf, welcher dafür eingerichtet ist, zu ermitteln, in welche Richtung die zweite RFID Leseeinheit ausgerichtet ist.

Vorteilhafterweise sind die Mittel zum Freigeben oder Sperren dafür eingerichtet, einen Sperrmechanismus zu lösen oder zu verriegeln, wobei jeweils ein solcher Sperrmechanismus an jedem Element aus der Vielzahl gleichartiger Elemente angeordnet ist. Vorteilhafterweise sind die Mittel zum Freigeben oder Sperren dafür eingerichtet, einen Sperrmechanismus zu lösen oder zu verriegeln, wobei jeweils ein solcher Sperrmechanismus an jeder Aufnahmevorrichtung aus der Vielzahl von der Aufnahmevorrichtungen angeordnet ist.

Zweckmäßigerweise sind die Mittel zum Freigeben oder Sperren dafür eingerichtet, durch Erzeugen eines elektromagnetischen Feldes den Sperrmechanismus zu lösen oder zu verriegeln.

Vorteilhafterweise sind die Mittel zum Freigeben oder Sperren dafür eingerichtet, durch Erzeugen eines elektromagnetischen Feldes und gleichzeitiges Übertragen eines Sicherheitscodes den Sperrmechanismus zu lösen oder zu verriegeln. Hierbei kann der Sperrmechanismus in ähnlicher Weise wie bei einer Zentralverriegelung eines Fahrzeugs mittels Transponders nur gelöst bzw. verriegelt werden, wenn ein zugehöriger Sicherheitscode übermittelt wird.

Vorteilhaft weisen die Mittel zum Empfangen des Signals einen Bluetooth-Empfänger auf. Jedoch können die Mittel zum Empfangen des Signals auch andere drahtlose Empfänger, wie z.B. einen WiFi Empfänger, oder auch drahtgebundene Empfänger, wie z.B. einen USB-Anschluss, aufweisen.

Gemäß einem weiteren Aspekt der vorliegenden Erfindung weist ein System zum Überwachen einer Vielzahl von Aufnahmevorrichtungen, welche dafür geeignet sind, eine Vielzahl gleichartiger Elemente aufzunehmen, auf:
die oben beschriebene Vorrichtung, eine erste Vielzahl von RFID Transpondern; und
eine zweite Vielzahl von RFID Transpondern;
wobei jeweils ein RFID Transponder aus der ersten Vielzahl von RFID Transpondern an einer Aufnahmevorrichtung aus der Vielzahl von Aufnahmevorrichtungen anbringbar ist und jeweils ein RFID Transponder aus der zweiten Vielzahl von RFID Transpondern an einem Element aus der Vielzahl gleichartiger Elemente anbringbar ist.

In einer bevorzugten Ausführungsform der Erfindung weist das System ferner eine Vielzahl von Sperrmechanismen auf, welche dafür eingerichtet sind, an der Vielzahl gleichartiger Elemente angeordnet zu werden und wobei die Mittel zum Freigeben oder Sperren dafür eingerichtet sind, die Entnahme des in der ausgewählten Aufnahmevorrichtung angeordneten Elements freizugeben bzw. zu sperren, indem sie den Sperrmechanismus des entsprechenden Elements lösen bzw. verriegeln.

In einer weiteren bevorzugten Ausführungsform der Erfindung weist das System ferner eine Vielzahl von Sperrmechanismen auf, welche dafür eingerichtet sind, an der Vielzahl von Aufnahmevorrichtungen angeordnet zu werden und wobei die Mittel zum Freigeben oder Sperren dafür eingerichtet sind, die Entnahme des in der ausgewählten Aufnahmevorrichtung angeordneten Elements freizugeben bzw. zu sperren, indem sie den Sperrmechanismus der entsprechenden Aufnahmevorrichtung lösen bzw. verriegeln.

ln einer weiteren bevorzugten Ausführungsform der Erfindung ist die Vielzahl von der Aufnahmevorrichtungen als Vielzahl von Anschlüssen und die Vielzahl gleichartiger Elemente als Vielzahl von Kabeln mit Steckern ausgebildet sind, wobei die Vielzahl von Anschlüssen dafür eingerichtet ist, die Stecker der Vielzahl von Kabeln aufzunehmen und
wobei jeder RFID Transponder aus der zweiten Vielzahl von RFID Transpondern dafür eingerichtet ist, an einem Kabel aus der Vielzahl von Kabeln benachbart zu dem Stecker des einen Kabels oder auf dem Knickschutz des Steckers des einen Kabels angeordnet zu werden.

In dieser bevorzugten Ausführungsform wird das erfindungsgemäße System benutzt, um Änderungen zu überwachen, welche an einem Patchpanel vorgenommen werden, d.h. Einbringen bzw. Herausziehen eines Steckers eines Patchkabels in einen bzw. aus einem der Anschlüsse des Patchpanels. Es ist aber natürlich ebenso denkbar, das erfindungsgemäße System zur Überwachung von Änderungen zu verwenden, welche beispielsweise an einem Gerät mit einer Vielzahl von Steckplätzen für Einsteckkarten, einem Rack mit einer Vielzahl von Aufnahmevorrichtungen für Geräte oder auch an einer auf einer Hutschiene angeordnete Schütze oder Relais für Industriekabel vorgenommen werden.

Bei der Verwendung an einem Patchpanel ist es zweckmäßig, die Transponder der ersten Vielzahl von Transpondern zweckmäßigerweise benachbart zu den jeweiligen ihnen zugeordneten Anschlüssen des Patchpanels anzuordnen, während die zweite Vielzahl von RFID Transpondern vorteilhafterweise auf den Kabeln benachbart zum Stecker des jeweiligen Kabels oder auf dem Knickschutz des Steckers des Kabels anzuordnen. Somit sind die den Kabeln zugeordneten Transponder nicht direkter Nähe zu den Transpondern an den Anschlüssen des Patchpanels angeordnet (wie dies bei einer Anordnung am Stecker der Fall wäre), wodurch Störungen beim Auslesen der einzelnen Transponder verringert werden.

Bei einer besonders bevorzugten Ausführungsform der Erfindung ist die Vorrichtung speziell für die Anwendung bei einem Patchpanel ausgelegt. In diesem Fall kann die Vorrichtung beispielweise im Wesentlichen die Form eines Stiftes aufweisen, an dessen Spitze die erste RFID Leseeinheit zum Auslesen der Transponder an den Patchanschlüssen angeordnet ist. Die zweite RFID Leseeinheit ist seitlich am Stift in geeignetem Abstand zu der ersten RFID Leseeinheit angeordnet, so dass bei einem Anschluss des Patchfeldes, in welchem ein Kabel mit entsprechendem Stecker eingesteckt ist, der am Anschluss angeordnete Transponder und der am Kabel angeordnete Transponder parallel, d.h. im Wesentlichen gleichzeitig, mit der erfindungsgemäßen Vorrichtung ausgelesen werden können.

Vorteilhafterweise weist das System ferner ein Dummyelement auf, welches dafür eingerichtet ist, in einer nicht bestückten Aufnahmevorrichtung angeordnet und mittels der Vorrichtung gesperrt zu werden, um die nicht bestückte Aufnahmevorrichtung vor einem unbefugten Zugriff zu schützen.

Gemäß einem weiteren Aspekt der vorliegenden Erfindung weist ein Verfahren zum Überwachen von Zustandsmodifikationen an einer Vielzahl von Aufnahmevorrichtungen, welche dafür geeignet sind, eine Vielzahl von gleichartigen Elementen aufzunehmen, auf:
Empfangen eines Signals, welches Informationen über einen auszuführenden Vorgang aufweist, wobei die Informationen ein Element aus der Vielzahl von gleichartigen Elementen,
eine Aufnahmevorrichtung aus der Vielzahl von Aufnahmevorrichtungen und eine Zustandsmodifikation spezifizieren;
Auslesen von ersten Identifikationsdaten aus einem ersten Radio Frequency ldentification, RFID, Transponder an einer von einem Benutzer ausgewählten Aufnahmevorrichtung; Auslesen von zweiten Identifikationsdaten aus einem zweiten Transponder an einem Element, welches in der ausgewählten Aufnahmevorrichtung angeordnet ist;
Verarbeiten der aus dem ersten und zweiten Transponder ausgelesenen ldentifikationsdaten um anhand der ersten und zweiten Identifikationsdaten zu ermitteln, ob die ausgewählte Aufnahmevorrichtung und das darin angeordnete Element in dem empfangenen Signal spezifiziert sind; und
basierend auf der in dem Signal spezifizierten Zustandsmodifikation, Freigeben oder Sperren einer Entnahme des in der ausgewählten Aufnahmevorrichtung angeordneten Elements, wenn die ausgewählte Aufnahmevorrichtung und das darin angeordnete Element in dem Signal spezifiziert sind.

Figur 1 zeigt eine vereinfachte schematische Darstellung eines Ausführungsbeispiels des erfindungsgemäßen Systems, welches ein Ausführungsbeispiel der erfindungsgemäßen Vorrichtung aufweist.

Figur 2a zeigt eine vereinfachte schematische Darstellung eines Ausführungsbeispiel eines an einem RJ-Stecker 200 angebrachten Sperrmechanismus 250 in einem geöffneten Zustand.

Figur 2b zeigt eine vereinfachte schematische Darstellung eines Ausführungsbeispiel eines an einem RJ-Stecker 200 angebrachten Sperrmechanismus 250 in einem geschlossenen Zustand.

Figur 3 zeigt ein weiteres Ausführungsbeispiel der erfindungsgemäßen Vorrichtung in einer beispielhaften Anwendung.

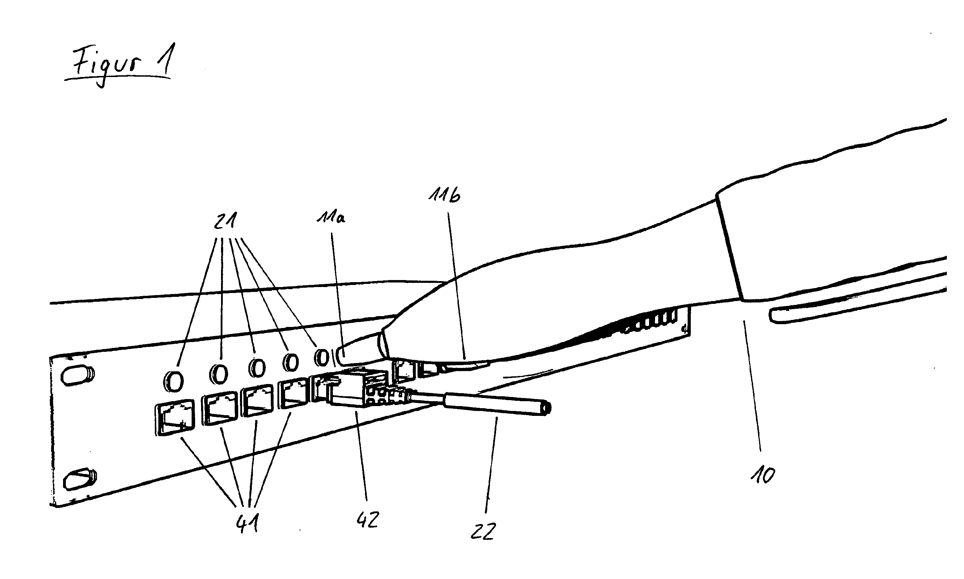

Figur 1 zeigt eine vereinfachte schematische Darstellung eines Ausführungsbeispiels des erfindungsgemäßen Systems, welches ein Ausführungsbeispiel der erfindungsgemäßen Vorrichtung aufweist.

Im Folgenden wird ein Ausführungsbeispiel des erfindungsgemäßen Systems und der erfindungsgemäßen Vorrichtung beschrieben, welche dafür eingerichtet sind, Änderungen zu überwachen, welche an einem Patchpanel vorgenommen werden, d.h. Einbringen bzw. Herausziehen eines Steckers eines Patchkabels in einen bzw. aus einem der Anschlüsse des Patchpanels. Dieses Ausführungsbeispiel ist jedoch gleichermaßen für die Überwachung einzelner Anschlüsse geeignet, welche in einem Zimmer angeordnet oder auch über mehrere Räume verteilt sind. Ein Beispiel hierfür sind Hausanschlüsse innerhalb eines Firmengebäudes, welche den Zugang zum Computersystem der Firma ermöglichen.

Es ist aber natürlich ebenso denkbar, das erfindungsgemäße System zur Überwachung von Änderungen zu verwenden, welche beispielsweise an einem Gerät mit einer Vielzahl von Steckplätzen für Einsteckkarten, an einem Rack mit einer Vielzahl von Aufnahmevorrichtungen für Geräte oder auch an auf einer Hutschiene angeordneten Schütze oder Relais für Industriekabel vorgenommen werden.

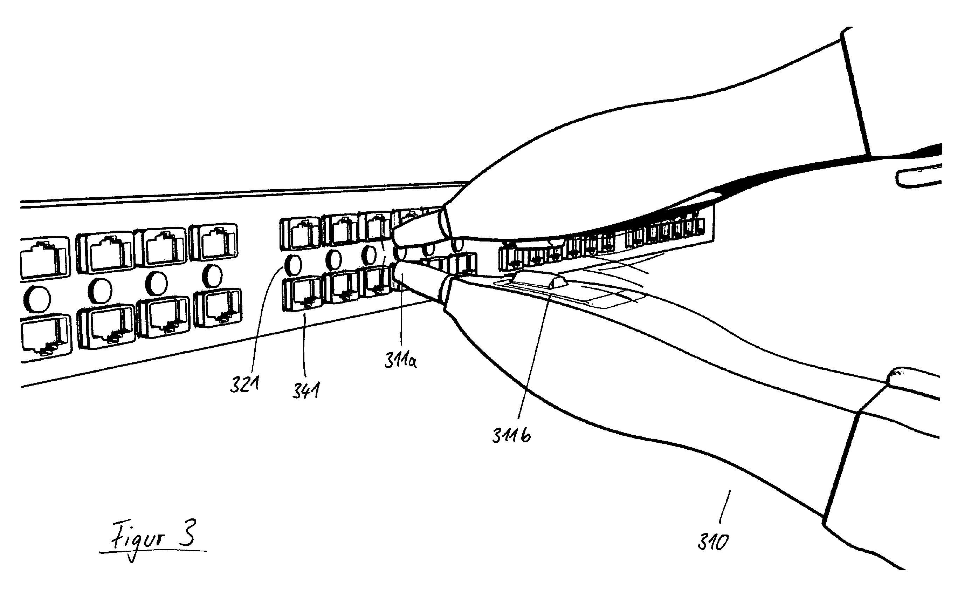

In Figur 1 ist ein beispielhaftes Patchfeld 40 mit einer Vielzahl von Anschlüssen 41 dargestellt, in welche geeignete Stecker von Patchkabeln 42 eingebracht werden können. In diesem Ausführungsbeispiel ist jedem Anschluss 41 ein Transponder 21 zugeordnet, wobei jedoch auch andere Zuordnungen möglich sind, wie z.B. in Figur 3 dargestellt.

Jedem Patchkabel 24 ist ebenfalls ein Transponder 22 zugeordnet, welcher in diesem Ausführungsbeispiel an dem Kabelende angebracht ist, welches an den Stecker des Kabels angrenzt. Vorteilhaft ist auch eine Anordnung der Transponder 22 am Knickschutz des Steckers des Kabels. Beide Alternativen ermöglichen ein einfaches, auch nachträgliches Austatten der Kabel mit Transpondern 22, da herkömmliche Kabel an diesen Stellen in der Regel in der Struktur wenig variieren. Hingegen kann die Struktur verschiedener Steckertypen deutlich variieren, was ein Anbringen von Transpondern erschwert.

Die Anordnung der Transponder 22 auf den Kabeln 42 benachbart zum Stecker des jeweiligen Kabels oder auf dem Knickschutz des Steckers des Kabels hat den weiteren Vorteil, dass die den Kabeln 42 zugeordneten Transponder 22 nicht in direkter Nähe zu den Transpondern 21 an den Anschlüssen 41 des Patchpanels angeordnet sind (wie dies bei einer Anordnung am Stecker der Fall wäre), wodurch Störungen beim Auslesen der einzelnen Transponder verringert werden.

Die Transponder weisen Identifikationsdaten auf, welche den jeweiligen Transponder und damit auch den zugeordneten Anschluss 41 bzw. das zugeordnete Kabel 42 eindeutig identifizieren. Vorteilhaft weisen die identifikationsdaten einen Unique-Identifier (UID) des Transponders auf, welcher in der Regel auf jedem Transponder gespeichert ist.

Die in Figur 1 dargestellte erfindungsgemäße Vorrichtung 10 weist vorteilhafterweise im Wesentlichen die Form eines Stiftes auf, da dieser eine angenehme und einfache Handhabung ermöglicht.

Die erfindungsgemäße Vorrichtung 10 (in Figur 1 zur Verdeutlichung übergroß dargestellt) zum Überwachen der Vielzahl von Aufnahmevorrichtungen 41 weist in diesem Ausführungsbeispiel zwei RFID Leseeinheiten 11 a und 11 b auf und ist insbesondere zum Überwachen von Anschlüssen für Netzwerkverbindungskabel mit sogenannten RJ-Steckern, insbesondere RJ45-Steckern, geeignet.

Die erste RFID Leseeinheit 11 a ist an der Spitze des Stiftes 10 angeordnet und ist dafür eingerichtet, einen der Transponder 21 auszulesen, welche den Anschlüssen 41 zugeordnet sind. Die zweite RFID Leseeinheit 11 b ist seitlich am Stift in geeignetem Abstand zu der ersten RFID Leseeinheit 11 a angeordnet, so dass bei einem Anschluss 41 des Patchfeldes 40, in welchem ein Kabel 42 mit entsprechendem Stecker eingesteckt ist, der am Anschluss angeordnete Transponder 21 und der am Kabel angeordnete Transponder 22 parallel, d.h. im Wesentlichen gleichzeitig, mit der erfindungsgemäßen Vorrichtung ausgelesen werden können.

Vorteilhafterweise bietet die Vorrichtung 10 zusätzlich die Option, nur die erste RFID Leseeinheit 11 a zum Auslesen der Transponder an den Anschlüssen und an den Kabeln zu verwenden. In diesem Fall werden die Transponder in serieller Abfolge von der ersten RFID Leseeinheit 11 a ausgelesen.

Um die Gefahr von Fehlbenutzungen zu minimieren, kann die Vorrichtung 10 vorteilhaft mit einer Sensorik ausgestattet sein, welche dafür eingerichtet ist, zu überprüfen, ob die Vorrichtung 10 beim Auslesen der Transponder vom Benutzer im Wesentlichen senkrecht zu einer Fläche gehalten wird, auf welcher die Vielzahl von Aufnahmevorrichtungen 41 angeordnet sind. Somit kann vermieden werden, dass parallel der Transponder einer Aufnahmevorrichtung und der Transponder eines Elements ausgelesen werden, welches in einer benachbarten Aufnahmevorrichtung (d.h. nicht in der "ausgelesenen" Aufnahmevorrichtung) angeordnet ist.

Vorteilhafterweise ist die Vorrichtung 10 dafür eingerichtet, dem Benutzer optisch (z.B. mittels farbiger LEDs oder eines Displays), akustisch (z.B. mittels eines Warntons) und/oder durch Virbrieren anzuzeigen, ob die Vorrichtung 10 vom Benutzer beim Auslesen der Transponder im Wesentlichen senkrecht zu der Fläche, auf welcher die Vielzahl von Aufnahmevorrichtungen 41 angeordnet sind, gehalten wird. Alternativ kann der Auslesevorgang abgebrochen werden, wenn die Vorrichtung vom Benutzer beim Auslesen der Transponder nicht im Wesentlichen senkrecht (z.B. innerhalb eines bestimmten Toleranzbereichs) zu der Fläche, auf welcher die Vielzahl von Aufnahmevorrichtungen 41 angeordnet sind.

Vorteilhaft kann die Vorrichtung einen Laserpointer aufweisen, welcher dem Benutzer anzeigt, auf welche Stelle bzw. auf welchen Transponder die erste Leseeinheit (bzw. die Spitze des Stiftes) gerade ausgerichtet ist.

Ferner weist die Vorrichtung 10 Mittel zum Empfangen eines Signals auf, welches Informationen über einen auszuführenden Vorgang aufweist, wobei die Informationen einen Anschluss, ein Kabel mit entsprechendem Stecker und eine Zustandsmodifikation spezifizieren.

Vorteilhaft weisen die Mittel zum Empfangen des Signals einen Bluetooth-Empfänger auf. Jedoch können die Mittel zum Empfangen des Signals auch andere drahtlose Empfänger, wie z.B. einen WiFi Empfänger, oder auch drahtgebundene Empfänger, wie z.B. einen USB-Anschluss, aufweisen.

Die Information, welche ein bestimmtes Kabel bzw. einen bestimmten Anschluss spezifiziert, kann beispielsweise einen Unique-Identifier (UID) des Transponders aufweisen, der dem Kabel bzw. Anschluss zugeordnet ist. Ein solcher UID ist in der Regel auf jedem Transponder gespeichert.

Des Weiteren weist die Vorrichtung 10 Mittel zum Verarbeiten der aus den Transpondern ausgelesenen ldentifikationsdaten auf, wobei die Mittel zum Verarbeiten dafür eingerichtet sind, anhand der ausgelesenen ldentifikationsdaten zu ermitteln, ob der ausgewählte Anschluss und das darin eingesteckte Kabel in dem empfangenen Signal spezifiziert sind.

Zweckmäßigerweise vergleichen die Mittel zum Verarbeiten die in dem empfangenen Signal enthaltenen UlDs mit den aus den Transpondern ausgelesenen UlDs des ausgewählten Anschlusses und des darin eingesteckten Kabels, um zu ermitteln, ob der ausgewählte Anschluss und das darin eingesteckte Kabel in dem empfangenen Signal spezifiziert sind.

Vorteilhaft weist die Vorrichtung Mittel zum Anzeigen auf, welche dafür eingerichtet sind, dem Benutzer der Vorrichtung beispielsweise optisch (z.B. mittels eines Displays oder LEDs) und/oder akustisch anzuzeigen, ob der ausgewählte Anschluss und das darin eingesteckte Kabel in dem empfangenen Signal spezifiziert sind.

Ferner weist die Vorrichtung Mittel zum Freigeben oder Sperren auf, die dafür eingerichtet sind, basierend auf der in dem Signal spezifizierten Zustandsmodifikation, eine Entnahme des in der ausgewählten Aufnahmevorrichtung angeordneten Elements freizugeben bzw. zu erlauben oder zu sperren bzw. zu unterbinden, wenn die Mittel zum Verarbeiten ermitteln, dass der ausgewählte Anschluss und das darin eingesteckte Kabel in dem Signal spezifiziert sind.

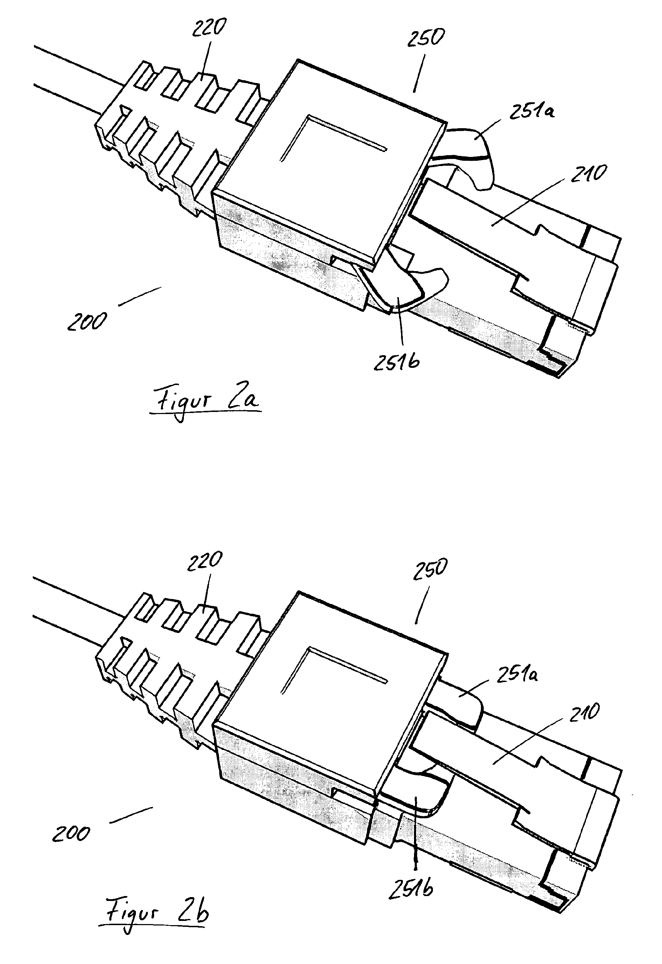

Vorteilhaft sind die Mittel zum Freigeben oder Sperren dafür eingerichtet, einen Sperrmechanismus zu lösen oder zu verriegeln, wobei derartige Sperrmechanismen an den Steckern der Kabel angeordnet sind. Die Sperrmechanismen werden in Zusammenhang mit den Figuren 2a und 2b noch näher erläutert.

In einer bevorzugten Ausführungsform der Erfindung kann das an die Vorrichtung 10 übertragene Signal beispielsweise einen Auftrag zum Ein- bzw. Ausstecken eines bestimmten Steckers in einen bzw. aus einem bestimmten Anschluss aufweisen. Ein Auftrag zum Umstecken eines bestimmten Steckers von einem Anschluss in einen anderen Anschluss kann als Kombination eines Aus- und Einsteckauftrags angesehen werden.

Vorteilhafterweise kann die Vorrichtung 10 ein Display aufweisen, welches den aktuellen Auftrag und/oder den Status der Abarbeitung des Auftrags anzeigt.

Im Folgenden wird an einem Beispiel das Abarbeiten eines solchen Auftrags erläutert.

Die Vorrichtung 10 empfängt ein Signal welches einen Auftrag für das Einstecken eines bestimmten Kabels in einen bestimmten Anschluss aufweist. Vorteilhafterweise kann der Auftrag auf einem Display der Vorrichtung 10 angezeigt werden. Nach dem Einstecken eines Kabels in einen Anschluss kann der Benutzer mittels der Vorrichtung überprüfen, ob er das richtige Kabel (gemäß dem empfangenen Auftrag) in den richtigen Anschluss (gemäß dem empfangenen Auftrag) gesteckt hat. Hierzu hält er die Spitze (an welcher die erste RFID-Leseeinheit 11 a angeordnet ist) der bevorzugt stiftförmigen Vorrichtung 10 an den Transponder des ausgewählten Anschlusses und richtet hierbei die Vorrichtung so aus, dass die Seite, an welcher die zweite RFID-Leseeinheit 11 b angeordnet ist, zu dem in den Anschluss eingesteckten Kabel zeigt. Auf diese Weise wird die zweite RFID-Leseeinheit 11 b an den Transponder des Kabels gehalten, so dass die erste und zweite Leseeinheit die jeweiligen Transponder parallel auslesen können. Stimmen die aus den Transpondern ausgelesenen UlDs mit den UlDs des Auftrags überein, so wurde der Auftrag korrekt ausgeführt und dies kann beispielsweise auf dem Display der Vorrichtung 10 angezeigt werden.

Daraufhin kann der Benutzer beispielsweise den nächsten Auftrag auswählen bzw. aktivieren.

In einem besonders bevorzugtem Ausführungsbeispiel weist das System ferner einen Dummystecker auf, welcher dafür eingerichtet ist, in einer nicht bestückten Aufnahmevorrichtung angeordnet und mittels der Vorrichtung gesperrt zu werden, um die nicht bestückte Aufnahmevorrichtung vor einem unbefugten Zugriff zu schützen. Dieser Dummystecker wird analog zu den "normalen" Steckern von der Vorrichtung 10 erkannt und gegebenenfalls gesperrt bzw. entsperrt.

Figur 2a zeigt eine vereinfachte schematische Darstellung eines Ausführungsbeispiel eines an einem RJ-Stecker 200 angebrachten Sperrmechanismus 250 in einem geöffneten Zustand.

Figur 2b zeigt eine vereinfachte schematische Darstellung eines Ausführungsbeispiel eines an einem RJ-Stecker 200 angebrachten Sperrmechanismus 250 in einem geschlossenen Zustand.

Der RJ-Stecker 200 weist einen Knickschutz 220 und den für einen RJ-Stecker typischen Hebel 210 zum Lösen bzw. Arretieren des Steckers 200 in einem RJ-Anschluss auf. Zwischen dem Knickschutz 220 des Steckers 200 und dem Hebel 210 ist ein Sperrmechanismus 250 angeordnet. Der Sperrmechanismus 250 weist zwei zangenförmigen Elemente 251 a und 251 b auf.

Im geöffneten Zustand (Figur 2a) sind die zangenförmigen Elemente 251 a und 251 b gespreizt und geben den Hebel 210 frei bzw. ermöglichen ein Niederdrücken des Hebels 210 zum Lösen des Steckers 200. Der Stecker 200 ist somit vom Anschluss lösbar bzw. im "freigegebenen Zustand".

lm geschlossenen Zustand (Figur 2b) sind die zangenförmigen Elemente 251 a und 251 b unter dem Hebel geschlossen und verhindern ein Niederdrücken des Hebels 210 zum Lösen des Steckers 200. Der Stecker 200 ist somit nicht vom Anschluss lösbar (sofern er im Anschluss eingesteckt ist) bzw. ist im "gesperrten Zustand".

Der Sperrmechanismus 250 weist ferner eine elektronische Schaltung mit einem Mikrocontroller auf, wobei die Schaltung dafür eingerichtet ist, elektromagnetische Signale zu empfangen und, der Mikrocontroller, basierend auf den empfangenen Signalen, ein Lösen oder Verriegeln des Sperrmechanismus initiiert. Der Sperrmechanismus 250 weist bevorzugt keine eigene Stromversorgung auf, sondern nützt die elektromagnetische Energie der empfangenen Signale als Energiequelle. Zweckmäßigerweise sind die Mittel zum Freigeben oder Sperren der Vorrichtung 10 dafür eingerichtet, durch Erzeugen eines elektromagnetischen Feldes den Sperrmechanismus zu lösen oder zu verriegeln. Somit wird die elektronische Schaltung des Sperrmechanismus durch das von der Vorrichtung 10 abgestrahlte elektromagnetische Feld mit Energie versorgt. Die Wirkungsweise der elektronischen Schaltung ähnelt somit einem passiven RFID Transponder/Chip, jedoch mit dem Zusatz, dass die dem elektromagnetischem Feld entzogene Energie auch zum Steuern bzw. Schalten der zangenförmigen Elemente 251 a und 251 b des Sperrmechanismus 250 verwendet wird. Hierbei kann ein Permanentmagnet, welcher einem elektromagnetischen Feld ausgesetzt wird, welches eine Kraft auf den Permanentmagneten ausübt, verwendet werden, um die zangenförmigen Elemente 251 a und 251 b zu bewegen. Das mechanische Schließen bzw. Öffnen der zangenförmigen Elemente 251 a und 251 b kann jedoch beispielsweise auch von einem Federmechanismus und/oder einem Piezoelement verursacht werden.

Vorteilhafterweise sind die Mittel zum Freigeben oder Sperren dafür eingerichtet, durch Erzeugen eines elektromagnetischen Feldes und gleichzeitiges Übertragen eines Sicherheitscodes den Sperrmechanismus 250 zu lösen oder zu verriegeln. Hierbei kann der Sperrmechanismus 250 in ähnlicher Weise wie bei einer Zentralverriegelung eines Fahrzeugs mittels Transponders nur gelöst bzw. verriegelt werden, wenn ein zugehöriger Sicherheitscode übermittelt wird. Hierbei überprüft der Mikrocontroller des Sperrmechanismus 250 den Sicherheitscode und veranlasst bei einem positiven Ergebnis ein Lösen oder Verriegeln des Sperrmechanismus 250.

Figur 3 bezieht sich auf ein besonders bevorzugtes Ausführungsbeispiel der erfindungsgemäßen Vorrichtung.

Die Vorrichtung 310 gemäß Figur 3 entspricht im Wesentlichen der Vorrichtung gemäß Figur 1, weist jedoch zusätzlich einen Lagesensor (nicht in Figur 3 abgebildet) auf, welcher dafür eingerichtet ist, zu ermitteln, in welche Richtung die zweite RFID Leseeinheit 311 b ausgerichtet ist, insbesondere, ob die zweite RFID Leseeinheit 311 b nach oben oder nach unten gerichtet ist.

Figur 3 zeigt ein Anwendungsbeispiel für eine Vorrichtung 310 mit einem Lagesensor in einer vereinfachten schematischen Darstellung. Diese Vorrichtung 310 kann besonders vorteilhaft bei der Überwachung von zweireihigen Anschlusspanels eingesetzt werden, bei welchen die Anschlüsse 341 in zwei Reihen angeordnet sind. Der Abstand zwischen den beiden Reihen ist in der Regel sehr klein, was zur Folge hat, dass die an den Anschlüssen 341 angeordneten Transponder nur sehr geringe Abstände besäßen, wenn für jeden Anschluss ein Transponder vorgesehen wäre. Bei zu geringen Abständen zwischen den einzelnen Transpondern ist jedoch ein korrektes und störungsfreies Auslesen der Transponder durch die erste RFID-Leseeinheit nicht in jedem Fall gewährleistet. Daher ist es vorteilhaft, nur jeweils einen Transponder zwischen zwei benachbarten Anschlüssen der zwei Reihen anzuordnen. So ist in der Mitte des Anschlusspanels nur eine Reihe von Transpondern 321 zwischen den zwei Reihen von Anschlüssen 341 angeordnet.

Der Lagesensor der Vorrichtung 310 ermöglicht bei dieser Anordnung dennoch eine eindeutige Zuordnung der einzelnen Anschlüsse. Der mittig angeordnete Transponder weist die Kennung des zugehörigen Anschlusspaares auf und die Vorrichtung ermittelt anhand der Daten des Lagesensors, welcher Anschluss des Anschlusspaares ausgelesen werden soll:
In diesem Beispiel ist die zweite RFID-Leseeinheit 311 b entweder nach oben bzw. nach unten ausgerichtet, um den Transponder des oberen bzw. des unteren Steckers/Kabels auszulesen. Der Lagesensor ermittelt die Ausrichtung der zweiten RFID-Leseeinheit 311 b und die aus dem Transponder (welcher zwischen dem Anschlusspaar angeordnet ist) ausgelesene UID kann eindeutig einem Anschluss zugeordnet werden: dem oberen Anschluss, wenn die zweite RFID-Leseeinheit 311 b nach oben ausgerichtet ist bzw. dem unteren Anschluss, wenn die zweite RFID-Leseeinheit 311 b entweder nach unten ausgerichtet ist.

## Patentansprüche

1. Vorrichtung (10) zum Überwachen einer Vielzahl von Aufnahmevorrichtungen (41), welche dafür geeignet sind, eine Vielzahl gleichartiger Elemente (42) aufzunehmen, insbesondere zum Überwachen von Vorgängen, die eine Änderung der Anordnung der Vielzahl von gleichartigen Elementen (42) in der Vielzahl von Aufnahmevorrichtungen (41) herbeiführen, wobei die Vorrichtung (10) aufweist:
Mittel zum Empfangen eines Signals, welches Informationen über einen auszuführenden Vorgang aufweist, wobei die Informationen ein Element aus der Vielzahl gleichartiger Elemente (42), eine Aufnahmevorrichtung aus der Vielzahl von Aufnahmevorrichtungen (41) und eine Zustandsmodifikation spezifizieren;
Mittel zum Auslesen von Radio Frequency Identification, RFID, Transpondern, welche Identifikationsdaten aufweisen, wobei die Mittel zum Auslesen dafür eingerichtet sind, erste ldentifikationsdaten aus einem ersten RFID Transponder (21) an einer ausgewählten Aufnahmevorrichtung auszulesen und zweite ldentifikationsdaten aus einem zweiten RFID Transponder (22) an einem Element auszulesen, welches in der ausgewählten Aufnahmevorrichtung angeordnet ist;
Mittel zum Verarbeiten der aus dem ersten und zweiten RFID Transponder (21, 22) ausgelesenen ldentifikationsdaten, wobei die Mittel zum Verarbeiten dafür eingerichtet sind, anhand der ersten und zweiten ldentifikationsdaten zu ermitteln, ob die ausgewählte Aufnahmevorrichtung und das darin angeordnete Element in dem Signal spezifiziert sind; und
Mittel zum Freigeben oder Sperren, wobei die Mittel zum Freigeben oder Sperren dafür eingerichtet sind, basierend auf der in dem Signal spezifizierten Zustandsmodifikation, eine Entnahme des in der ausgewählten Aufnahmevorrichtung angeordneten Elements freizugeben oder zu sperren, wenn die Mittel zum Verarbeiten ermitteln, dass die ausgewählte Aufnahmevorrichtung und das darin angeordnete Element in dem Signal spezifiziert sind.

2. Vorrichtung gemäß Anspruch 1, wobei die Mittel zum Auslesen eine RFID Leseeinheit aufweisen, welche dafür eingerichtet ist, den ersten und den zweiten RFID Transponder (21,22) in serieller Abfolge auszulesen.

3. Vorrichtung gemäß Anspruch 1, wobei die Mittel zum Auslesen eine erste und eine zweite RFID Leseeinheit (11 a, 11 b) aufweisen, wobei die erste RFID Leseeinheit (11 a) dafür eingerichtet ist, den ersten RFID Transponder (21) auszulesen und die zweite RFID Leseeinheit (11 b) dafür eingerichtet ist, den zweiten RFID Transponder (22) auszulesen.

4. Vorrichtung gemäß Anspruch 3, wobei die erste und zweite RFID Leseeinheit (11a, 11 b) dafür eingerichtet sind, den ersten RFID Transponder (21) und den zweiten RFID Transponder (22) parallel auszulesen.

5. Vorrichtung gemäß einem der vorhergehenden Ansprüche, wobei die Vorrichtung ferner mit einer Sensorik ausgestattet ist, welche dafür eingerichtet ist, zu überprüfen, ob die Vorrichtung vom Benutzer beim Auslesen der RFID Transponder im wesentlichen senkrecht zu der Fläche, auf welcher die Vielzahl von Aufnahmevorrichtungen (41) angeordnet sind, gehalten wird.

6. Vorrichtung gemäß einem der vorhergehenden Ansprüche, wobei die Mittel zum Freigeben oder Sperren dafür eingerichtet sind, einen Sperrmechanismus (250) zu lösen oder zu verriegeln, wobei jeweils ein solcher Sperrmechanismus (250) an jedem Element aus der Vielzahl gleichartiger Elemente (42) angeordnet ist.

7. Vorrichtung gemäß einem der Ansprüche 1 - 5, wobei die Mittel zum Freigeben oder Sperren dafür eingerichtet sind, einen Sperrmechanismus (250) zu lösen oder zu verriegeln, wobei jeweils ein solcher Sperrmechanismus (250) an jeder Aufnahmevorrichtung aus der Vielzahl von Aufnahmevorrichtungen (41) angeordnet ist.

8. Vorrichtung gemäß Anspruch 6 oder 7, wobei die Mittel zum Freigeben oder Sperren dafür eingerichtet sind, durch Erzeugen eines elektromagnetischen Feldes den Sperrmechanismus (250) zu lösen oder zu verriegeln.

9. Vorrichtung gemäß einem der Ansprüche 3 - 8, wobei die Vorrichtung einen Lagesensor aufweist, welcher dafür eingerichtet ist, zu ermitteln, in welche Richtung die zweite RFID Leseeinheit ausgerichtet ist.

10. Vorrichtung gemäß einem der vorhergehenden Ansprüche, wobei die Vorrichtung ferner Mittel zum Übertragen eines Sicherheitscodes aufweist.

11. System zum Überwachen einer Vielzahl von Aufnahmevorrichtungen (41), welche dafür geeignet sind, eine Vielzahl gleichartiger Elemente (42) aufzunehmen, wobei das System aufweist:
die Vorrichtung (10) gemäß einem der vorhergehenden Ansprüche;
eine erste Vielzahl von RFID Transpondern (21); und
eine zweite Vielzahl von RFID Transpondern (22);
wobei jeweils ein RFID Transponder aus der ersten Vielzahl von RFID Transpondern (21) an einer Aufnahmevorrichtung aus der Vielzahl von Aufnahmevorrichtungen (41) anbringbar ist und jeweils ein RFID Transponder aus der zweiten Vielzahl von RFID Transpondern (22) an einem Element aus der Vielzahl gleichartiger Elemente (42) anbringbar ist.

12. System gemäß Anspruch 11, ferner aufweisend eine Vielzahl von Sperrmechanismen (250), welche dafür eingerichtet sind, an der Vielzahl gleichartiger Elemente (42) angeordnet zu werden und wobei die Mittel zum Freigeben oder Sperren dafür eingerichtet sind, die Entnahme des in der ausgewählten Aufnahmevorrichtung angeordneten Elements freizugeben bzw. zu sperren, indem sie den Sperrmechanismus (250) des entsprechenden Elements lösen bzw. verriegeln.

13. System gemäß Anspruch 11, ferner aufweisend eine Vielzahl von Sperrmechanismen (250), welche dafür eingerichtet sind, an der Vielzahl von Aufnahmevorrichtungen (41) angeordnet zu werden und wobei die Mittel zum Freigeben oder Sperren dafür eingerichtet sind, die Entnahme des in der ausgewählten Aufnahmevorrichtung angeordneten Elements freizugeben bzw. zu sperren, indem sie den Sperrmechanismus (250) der entsprechenden Aufnahmevorrichtung lösen bzw. verriegeln.

14. System gemäß einem der vorhergehenden Ansprüche, wobei die Vielzahl von Aufnahmevorrichtungen (41) als Vielzahl von Anschlüssen und die Vielzahl gleichartiger Elemente (42) als Vielzahl von Kabeln mit Steckern ausgebildet sind, wobei die Vielzahl von Anschlüssen (41) dafür eingerichtet ist, die Stecker der Vielzahl von Kabeln (42) aufzunehmen und wobei jeder RFID Transponder aus der zweiten Vielzahl von RFID Transpondern (22) dafür eingerichtet ist, an einem Kabel aus der Vielzahl von Kabeln (42) benachbart zu dem Stecker des einen Kabels oder auf dem Knickschutz des Steckers des einen Kabels angeordnet zu werden.

15. Verfahren zum Überwachen von Zustandsmodifikationen an einer Vielzahl von Aufnahmevorrichtungen (41), welche dafür geeignet sind, eine Vielzahl von gleichartigen Elementen (42) aufzunehmen, wobei das Verfahren aufweist:
Empfangen eines Signals, welches Informationen über einen auszuführenden Vorgang aufweist, wobei die Informationen ein Element aus der Vielzahl von gleichartigen Elementen (42), eine Aufnahmevorrichtung aus der Vielzahl von Aufnahmevorrichtungen (41) und eine Zustandsmodifikation spezifizieren;
Auslesen von ersten ldentifikationsdaten aus einem ersten Radio Frequency Identification, RFID, Transponder (21) an einer von einem Benutzer ausgewählten Aufnahmevorrichtung;
Auslesen von zweiten ldentifikationsdaten aus einem zweiten RFID Transponder (22) an einem Element, welches in der ausgewählten Aufnahmevorrichtung angeordnet ist;
Verarbeiten der aus dem ersten und zweiten RFID Transponder (21,22) ausgelesenen ldentifikationsdaten, um anhand der ersten und zweiten ldentifikationsdaten zu ermitteln, ob die ausgewählte Aufnahmevorrichtung und das darin angeordnete Element in dem empfangenen Signal spezifiziert sind; und
basierend auf der in dem Signal spezifizierten Zustandsmodifikation, Freigeben oder Sperren einer Entnahme des in der ausgewählten Aufnahmevorrichtung angeordneten Elements, wenn die ausgewählte Aufnahmevorrichtung und das darin angeordnete Element in dem Signal spezifiziert sind.
